# EUROPEAN PATENT APPLICATION

(11) **EP 2 088 343 A2**
(43) Date of publication of application: **12.08.2009**
(21) Application number: 09250314.3
(22) Date of filing: 07.02.2009
(51) Int. Cl.: F16D 23/06

(54) **Synchromesh mechanism and synchromesh transmission**

(30) Priority: 08.02.2008 JP 2008029080
(71) Applicant: AISIN AI Co., Ltd., Nishio-shi, Aichi-ken (JP)
(72) Inventor: Miyazaki, Takeshige, Nishio-shi, Aichi-ken (JP)
(74) Representative: Lacey, Dean Andrew

(57) **Abstract**

A synchromesh mechanism (2, 3) includes: a rotational shaft (13, 14); a gear (155D, 151F, 152F, 153F, 154F), idly rotatably provided at the rotational shaft (13, 14) and including a slide portion (531, 532) at a first side thereof and an engagement portion (541) at a second side thereof in an axial direction; a slide member (43, 44), held at the rotational shaft (13, 14) and operated to slide on the slide portion (531, 532) of the gear (155D, 151F, 152F, 153F, 154F) by moving in the axial direction; a driving member (41), synchronously rotating the rotational shaft (13, 14) and the gear (155D, 151F, 152F, 153F, 154F) by thrusting the slide member (43, 44) so as to slide on the slide portion (531, 532) of the gear (155D, 151F, 152F, 153F, 154F); and an engagement member (171, 172), held at the rotational shaft (13, 14) and integrally rotating the rotational shaft (13, 14) and the gear (155D, 151F, 152F, 153F, 154F) by moving in the axial direction to engage with the engagement portion (541) of the gear (155D, 151F, 152F,153F,154F).

## Description

### FIELD OF THE INVENTION

The present invention relates to a synchromesh transmission adapted to a vehicle or the like and to a synchromesh mechanism configuring a transmission.

### BACKGROUND

As one type of a transmission for a vehicle, a synchromesh transmission is known which includes: a plurality of gear sets, which achieves a predetermined gear ratio; a synchromesh mechanism, which selects one of the gear sets, synchronizes driving and driven gears thereof and subsequently connects the driving and driven gears to transmit a torque therebetween; and an operating portion, which operates the synchromesh mechanism. A manual transmission, in which a shifting operation is manually operated, and an automatic transmission, in which a shifting operation is automatically executed by an actuator, such as a motor or the like, are included in such type of transmission.

In a conventional synchromesh mechanism, a function and a structure are adapted in which rotational speed is synchronized between a rotational shaft and an idler gear before the rotational shaft and the idler gear are connected to be integrally rotated. A synchromesh mechanism is disclosed in JP2007-292151A (which will be referred to as reference 1 hereinbelow) as an example. The synchromesh mechanism, in reference 1 includes a rotational shaft, gears, a synchronizer hub, a synchronizer sleeve, and synchronizer rings as main components. The synchronizer hub is attached to the rotational shaft so as to be integrally rotated relative to the rotational shaft. The synchronizer sleeve and the synchronizer rings are structured to be rotated integrally with the synchronizer hub and to slide in an axial direction. Synchronization is achieved when a tapered thrusting surface of the synchronizer ring frictionally slides on a tapered cone portion of the gear. Further, the rotational shaft and the gear are integrally rotated when clutch gears, respectively formed at the synchronizer sleeve and the gear, are engaged with each other.

An automatic transmission operating device, which functions as an operating portion operating a synchromesh mechanism is disclosed in JP2004-176894A (which will be hereinbelow referred to as reference 2). In the transmission operating device in reference 2, a shift-and-select shaft is moved in an axial direction thereof by a selecting actuator so that one of a plurality of fork shafts is selected. Subsequently, the shift-and-select shaft is rotated by a shift actuator so as to drive the selected fork shaft and thereby a sleeve of the synchromesh mechanism is operated. A transmission operation is automatically executed by a control portion controlling two actuators on the basis of transmission operation commands while referring to a detected amount of the sensor, such as a shifting amount detecting means.

Not only in reference 1 and reference 2 but also in the conventional synchromesh mechanism, each stage of a synchronous engagement progresses by a movement of the sleeve, which is rotated integrally with the rotational shaft, in the axial direction. For example, in a synchromesh mechanism of a key synchronizer system using an index key, the sleeve starts to be moved from a neutral state to an index stage, in which the index key contacts the synchronizer ring. Subsequently, in a balk stage, the sleeve and the synchronizer ring contact each at chamfers thereof and cone portions thereof frictionally slide on each other to be synchronized. When synchronization is achieved, a stage progresses to a thrusting through stage, in which the sleeve moves by thrusting through an outer circumference of the synchronizer ring. Finally, the synchronous engagement is completed when the engaging stage is finished, in which the sleeve is directly engaged with the gear.

In order to smoothly operate the synchronous engagement of the synchromesh mechanism within a short time without generating gear squeaking, the control portion of the automatic transmission operating device adjusts an operating force of an actuator on the basis of information from various sensors. However, the conventional structure has a structural limitation in which each of the stages progresses in accordance with the movement of the sleeve in the axial direction. Therefore, it is difficult to greatly shorten time required for the synchronous engagement in the conventional structure.

In the transmission operation of an operating mechanism having the conventional shift-and-select shaft, a following series of operations is required: first, the driving gear set is returned to the neutral state; second, a desired gear set is selected; and finally, the new gear set is synchronized and engaged. The three operational steps, which are described above, are not operated simultaneously. Therefore, time required for the transmission operation is prevented from being shortened. Accordingly, shortening of transmission operating time is required especially when a transmission is shifted up to accelerate a vehicle right after the vehicle starts to be driven.

A need thus exits for a synchromesh mechanism, in which time required for a synchronous engagement is shortened, and for a synchromesh transmission, in which transmission operating time is shortened.

### SUMMARY OF THE INVENTION

According to an aspect of the present invention, a synchromesh mechanism includes: a rotational shaft; a gear, idly rotatably provided at the rotational shaft and including a slide portion at a first side thereof and an engagement portion at a second side thereof in an axial direction; a slide member, held at the rotational shaft and operated to slide on the slide portion of the gear by moving in the axial direction; a driving member, synchronously rotating the rotational shaft and the gear by thrusting the slide member so as to slide on the slide portion of the gear; and an engagement member, held at the rotational shaft and integrally rotating the rotational shaft and the gear by moving in the axial direction to engage with the engagement portion of the gear.

According to a further aspect of the present invention, the synchromesh mechanism further including: a sliding actuating portion, operating the driving member; and an engaging actuating portion, operating the engagement member.

Accordingly, a conventional sleeve of a single body is functionally separated into the driving member for synchronization and the engagement member for integral rotation so as to be a dual sleeve system. Consequently, time required for synchronous engagement is greatly shortened. Further, in the synchromesh transmission having the synchromesh mechanism according to the present invention, a plurality of sleeves is operated simultaneously. Therefore, time required for selecting and shifting the gear sets is shortened. Consequently, as an entire effect together with the above-described shortening of time required for a synchronous engagement, time required for the transmission operation is greatly shortened.

The synchromesh mechanism according to the present invention includes the rotational shaft, the gear, the slide member, the driving member and the engagement member. Further, the synchromesh mechanism may include the sliding actuating portion and the engaging actuating portion. The rotational shaft may be the input shaft, the output shaft, or a third counter shaft. The gear includes teeth, which transmit a torque, at the circumference thereof. The gear is idly rotatably provided at an outer circumference of the rotational shaft via, for example, a needle bearing. The slide portion is provided at first side of the gear and the engagement portion is provided at a second side of the gear in the axial direction. The slide portion and the engagement portion may be formed integrally with the gear, or may be separately formed and then thrust into the gear to be integrally assembled thereat.

The slide member is held at the rotational shaft to be integrally rotated. The slide member is moved in the axial direction to slide on the slide portion, which is provided at the first, side of the gear. The driving member thrusts the slide member toward the slide portion of the gear so that the slide member slides thereon. Difference in rotational speed between the rotational shaft and the gear is quickly reduced by friction generated when the slide member slides on the slide portion, thereby achieving a synchronous rotation. Further, the driving member may be operated by the sliding actuating portion.

The engagement member is held at the rotational shaft to be integrally rotated therewith. The engagement member is moved in the axial direction to engage with the engagement portion, which is provided at the second side of the gear. The engagement member is provided across the gear at a position opposite to the slide member and the driving member. The engagement member rotates the rotational shaft integrally with the gear by engaging with the engagement portion. Further, the engagement member may be operated by the engaging actuating portion.

Each of the sliding actuating portion and the engaging actuating portion may be assembled with a direct current motor and an operation mechanism portion. Each of the slide member and the engagement member may be operated both in a front direction and in a rear direction in the axial direction by switching a power source polarity of the direct current motor.

Aspects of the slide potion of the gear, the engagement portion of the gear, the slide member, the driving member and the engagement member will be described hereinbelow.

According to a further aspect of the present invention, the slide portion of the gear is a first slide cone portion, which is tapered. The slide member is a synchronizer ring including a second slide cone portion, which slides on the first slide cone portion by being tapered complementary to the first slide cone portion. The driving member is a sliding sleeve provided at an outer circumference of a sliding hub, which is integrally formed at the rotational shaft, so as to be integrally rotated and to be moved in the axial direction.

The slide portion of the gear, which achieves synchronization by friction generated by sliding, is the tapered first slide cone portion. The slide member is the synchronizer ring, which has the tapered second slide cone portion. The second slide cone portion slides on the first slide cone portion by a large dimension by being tapered so as to be complementary to the first slide cone portion. The driving member includes an inner spline. The inner spline of the driving member is engaged with an outer spline of the sliding hub. The driving member is the sliding sleeve, which is provided to be moved in the axial direction. The sliding sleeve according to the present invention does not thrust through an outer circumference of the synchronizer sleeve. Therefore, a chamfer is not needed. Further, an index key is not needed.

According to a further aspect of the present invention, the engagement portion of the gear is an outer spline provided at an outer circumference of the gear. The engagement member is an engaging sleeve provided at an outer circumference of an engaging hub, which is integrally provided at the rotational shaft, so as to be integrally rotated and so as to be moved in the axial direction, the engaging sleeve including an inner spline, which is engaged with the outer spline.

The engagement portion of the gear, which achieves an integral, rotation by engagement, is the outer spline. The engagement member is the engaging sleeve, which includes the inner spline engaged with the outer spline of the gear. Further, an outer circumference of an engaging hub is an outer spline, with which the inner spline of the engaging sleeve is engaged to move in the axial direction.

According to a further aspect of the present invention, one of the engagement portion of the gear and the engagement member includes a plurality of grooves provided so as to be spaced away from each other in a circumferential direction and the other one of the engagement portion of the gear and the engagement member includes a corresponding number of protruding portions engaged with the grooves.

Engagement between the engagement portion of the gear and the engagement member is not necessarily achieved by spline engagement in which a large number of recessed portions and a corresponding number of protruding portions are respectively formed at whole circumferences of the engagement portion and the engagement member. Instead, the engagement between the engagement portion of the gear and the engagement member may be achieved by a simple form in which a plurality of grooves and a corresponding number of protruding portions are respectively provided at several number of portions of the engagement portion and a corresponding number of portions of the engagement member. "Several number" herein refers to a predetermined number less than "large number".

In the synchromesh mechanism according to the present invention, first, the sliding sleeve thrusts the synchronizer ring so that the second slide cone portion of the synchronizer ring slides on the first slide cone portion of the gear. Consequently, the rotational shaft and the gear are frictionally synchronized. Subsequently, the engaging sleeve engages with the gear. Consequently, the rotational shaft and the gear are integrally rotated.

The synchromesh mechanism according to the present invention includes the sliding sleeve and the engaging sleeve and therefore referred to as a dual sleeve system. According to the present invention, the conventional index stage and the conventional thrusting through stage are not required. Further, the sliding sleeve and the engaging sleeve share functions. Therefore, each moving stroke of the sliding sleeve and the engaging sleeve is shortened compared to a conventional moving stroke of a sleeve. Furthermore, two sleeves may be operated simultaneously. For the three reasons, which are described above, time required for synchronous engagement may be greatly shortened compared to conventional time required for synchronous engagement.

A synchromesh transmission according to the present invention will be described hereinbelow. According to an aspect of the present invention, a synchromesh transmission includes: a casing; a plurality of rotational shafts, supported at the casing and transmitting a torque; a plurality of gear sets, provided at the rotational shafts and achieving a predetermined gear ratio by selectively engaging with the rotational shafts; and a synchromesh mechanism according to the present invention provided at at least one of the gear sets.

According to a further aspect of the present invention, the synchromesh mechanism according to the present invention is provided at the gear set for achieving an intermediate gear ratio.

Accordingly, the synchromesh transmission is structured by adapting the synchromesh mechanism of the dual sleeve system according to the present invention. The dual sleeve system is not necessarily adapted to all of the gear sets and may be adapted to a part of the gear sets. In the synchromesh mechanism of the dual sleeve system, sleeves need to be respectively provided at first and second sides of the gear set in the axial direction. Therefore, when the synchromesh mechanisms of the dual sleeve system are adapted to all of the gear sets, a length of the transmission in an axial direction thereof is excessively elongated. Therefore, the synchromesh mechanism of the dual sleeve system may be adapted to the gear set in which shortening of transmission operating time is necessary. More specifically, the synchromesh mechanisms of the dual sleeve system may be adapted to the intermediate shift stages, such as the second shift stage or the third shift stage in order to shorten transmission operating time when the transmission is shifted up and the vehicle is accelerated right after the vehicle starts to be driven.

A conventional synchromesh transmission includes: a plurality of synchromesh mechanisms, each of which includes two sets of gear sets respectively provided at right and left sides thereof; a plurality of fork shafts, each of which operates a sleeve of the synchromesh mechanism; and a shift-and-select shaft, which selects and drives the fork shafts. In the conventional transmission, the transmission operation of the gear sets, which are respectively provided at right and left sides of the synchromesh mechanism, may be operated within a short time. However, transmission operating time is prolonged in the transmission operation, in which different synchromesh mechanisms are used, because the fork shafts need to be switched. Thus, the dual sleeve system according to the present invention is effective when the dual sleeve system according to the present invention is adapted to the two sets of gear sets, which require different synchromesh mechanisms in the transmission operation in the conventional structure.

According to a further aspect of the present invention, the synchromesh mechanism according to the present invention is provided at at least one of gears of plurality of rotational shafts.

Not only the synchromesh mechanism of the dual sleeve system but also the conventional synchromesh mechanism may be provided at one gear of the gear set. Therefore, the synchromesh mechanism of the dual sleeve system according to the present invention may be adapted not only at a specific rotational shaft but also at each of a plurality of shafts. For example, the dual sleeve system may be adapted at a part of gears, which is provided at the input shaft, and at the gear of the different gear ratio, which is provided at the output shaft, Further, the synchromesh mechanisms of the dual sleeve system according to the present invention may be adapted to be distributed at a plurality of output shafts.

Movements and functions of the synchromesh transmission according to the present invention will be described hereinbelow as compared with the conventional structure. In the conventional transmission, first, the sleeve of the gear set, which is transmitting a torque, is returned from an engaging state to a neutral state. Such operation is operated via the shift-and-select shaft and a first fork shaft. Second, a second fork shaft is selected by a selecting operation of the shift-and-select shaft. Finally, the shift-and-select shaft operates a shift-in operation, in which the second fork shaft drives a new sleeve being in a neutral state. Consequently, synchronization by means of sliding friction and integral rotation by means of spline engagement are achieved between the gear set and the rotational shaft and thereby the transmission operation is completed.

In contrast, in the transmission according to the present invention having the synchromesh mechanism of the dual sleeve system, first the engaging sleeve of the gear set, which is transmitting the torque, is pulled out of an engaging state to be in a neutral state. Second, without pause, the sliding sleeve of a new gear set is driven so that the new gear set is synchronized by sliding friction. Finally, the engaging sleeve of the new gear set is driven to be in an engaging state and thereby the transmission operation is completed.

In the conventional transmission, the shift-and-select shaft selects and drives the fork shaft in order to operate the sleeves and thereby the transmission operation is operated sequentially. In contrast, in the present invention, a plurality of sleeves is related and operated simultaneously. For example, even though the engaging sleeve is not finally moved to the neutral position when the engaging actuating portion moves out the engaging sleeve, the sliding sleeve may starts to slide on the new gear set at a moment at which engagement of the engaging sleeve is released. Further, the sliding sleeve of the new gear set is moved in advance to a position closest to a position where sliding is started. Thus, time required for selecting and shifting the gear sets is shortened in the present invention. Therefore, as an entire effect together with the shortening of time required for a synchronous engagement, the transmission operating time is greatly shortened.

In the synchromesh mechanism according to the present invention, the driving member, which thrusts the slide member, and the engagement member, which engages with the gear, are separately operated. Therefore, time required for the synchronous engagement is greatly shortened compared to the conventional synchromesh mechanism. Further, according to the synchromesh transmission having the synchromesh mechanism, time required for selecting and shifting the gear sets is shortened. Therefore, as an entire effect together with the shortening of time required for the synchronous engagement, transmission operating time is greatly shortened.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a cross-sectional view illustrating a synchromesh transmission according to an embodiment;

Fig. 2 is a cross-sectional view illustrating a synchromesh mechanism according to the embodiment that is adapted to the synchromesh transmission in Fig. 1;

Figs. 3A, 3B and 3C schematically illustrate movements and operations of the synchromesh mechanism according to the embodiment in Fig. 2;

Figs. 4A, 4B, 4C, 4D and 4E schematically illustrate movements and operations of a conventional synchromesh mechanism having a synchronizer key;

Fig. 5 is a planar view illustrating a sliding operating portion and an engaging operating portion of the synchromesh transmission according to the embodiment in Fig. 1;

Fig. 6 is a side view illustrating the sliding operating portion and the engaging operating portion in Fig. 5 seen from a left direction in Fig. 5; and

Fig. 7 is a cross-sectional view illustrating the sliding operating portion taken along line VII - VII - VII - VII in Fig. 5.

### DETAILED DESCRIPTION

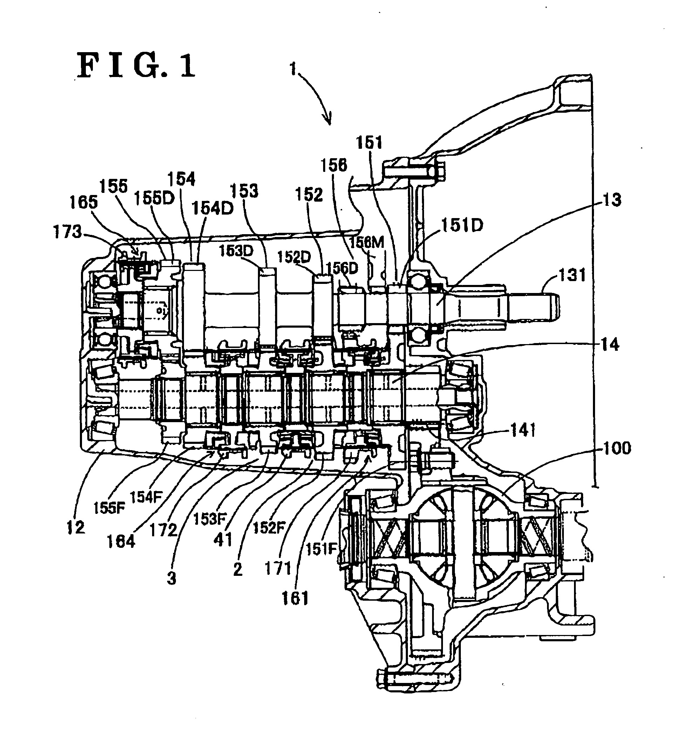

An embodiment will be described hereinbelow with reference to the attached Figs. 1 - 7. Fig. 1 is a cross-sectional view illustrating a synchromesh transmission 1 according to the embodiment. The synchromesh transmission 1 according to the embodiment changes a gear ratio of a rotational torque, which is inputted to an input shaft 13 (a rotational shaft), to one of forward movement five shift stages and a reverse movement shift stage, and outputs the rotational torque through an output shaft 14 (a rotational shaft) to a differential device 100. The synchromesh transmission 1 according to the embodiment includes: a casing 12; the input shaft 13; the output shaft 14; a first shift stage gear set 151 (a gear set); a second shift stage gear set 152 (a gear set); a third shift stage gear set 153 (a gear set); a fourth shift stage gear set 154 (a gear set); a fifth shift stage gear set 155 (a gear set); a reverse movement gear mechanism 156; a conventional first synchromesh mechanism 161, provided to the first shift stage gear set 151; a conventional fourth synchromesh mechanism 164, provided to the fourth shift stage gear set 154; a conventional fifth synchromesh mechanism 165 (a synchromesh mechanism), provided to the fifth shift stage gear set 155; a second synchromesh mechanism 2 (a synchromesh mechanism) according to the embodiment, provided to the second shift stage gear set 152; and a third synchromesh mechanism 3 according to the embodiment (a synchromesh mechanism), provided to the third shift stage gear set 153.

As illustrated in Fig. 1, the input shaft 13 is supported at an upper side of an inside of the casing 12 in Fig. 1. A rotational torque is inputted into the input shaft 13 from a right end 131 thereof in Fig. 1. The output shaft 14 is supported at a lower side of the inside of the casing 12. The rotational torque is outputted from an output gear 141 of the output shaft 14, which is provided at a right end thereof in Fig. 1, into the differential device 100. A first shift stage driving gear 151D, a second shift stage driving gear 152D, a third shift stage driving gear 153D, a fourth shift stage driving gear 154D and a fifth shift stage driving gear 155D (a gear), which respectively structure the first shift stage gear set 151, the second shift stage gear set 152, the third shift stage gear set 153, the fourth shift stage gear set 154 and the fifth shift stage gear set 155 are aligned at the input shaft 13 in a row in order from a right side in Fig. 1. A first shift stage driven gear 151F (a gear), a second shift stage driven gear 152F (a gear), a third shift stage driven gear 153F (a gear), a fourth shift stage driven gear 154F (a gear), and a fifth shift stage driven gear 155F are aligned in a row at the output shaft 14 at corresponding positions. In five sets of the first to fifth shift stage gear sets 151 - 155, the first shift stage driving gear 151D to the fourth shift stage driving gear 154D are fixed at the input shaft 13 so as to be integrally rotated. The fifth shift stage driven gear 155F is fixed at the output shaft 14 so as to be integrally rotated. The other shift stage gear sets, that is the first shift stage driven gear set 151F to the fourth shift stage driven gear set 154F are idly rotatably provided at the output shaft 14. The fifth shift stage driving gear 155D is idly rotatably provided at the input shaft 13.

A reverse movement driving gear 156D of the reverse movement gear mechanism 156 is provided at the input shaft 13 between the first shift stage driving gear 151D and the second shift stage driving gear 152D. The reverse movement driving gear 156D is engaged with and released from the output shaft 14 via a reverse movement intermediate gear 156M so that the output shaft 14 is rotated in a reverse direction. The reverse movement gear mechanism 156 is not provided with a synchromesh mechanism.

The conventional first synchromesh mechanism 161, the conventional fourth synchromesh mechanism 164 and the conventional fifth synchromesh mechanisms 165 are respectively provided to the first shift stage driven gear 151F, the fourth shift stage driven gear 154F and the fifth shift stage driving gear 155D, each of which is provided so as to be idly rotated. In the first synchromesh mechanism 161, a first sleeve 171 (an engagement member) for first and second shift stages is provided between the first shift stage driven gear 151F and the second shift stage driven gear 152F. The first synchromesh mechanism 161 functions when the first sleeve 171 for the first and second shift stages is operated in a right direction in Fig. 1 from an intermediate neutral position. Likewise, in the fourth synchromesh mechanism 164, a second sleeve 172 (an engagement member) for third and fourth shift stages is provided between the third shift stage driven gear 153F and the fourth shift stage driven gear 154F. The fourth synchromesh mechanism 164 functions when the second sleeve 172 for the third and fourth shift stages is operated in a left direction from an intermediate neutral position in Fig. 1. Further, in the fifth synchromesh mechanism 165, a third sleeve 173 for a fifth shift stage is provided at a left side of the fifth driving gear 155D in Fig. 1. The fifth synchromesh mechanism 165 functions when the third sleeve 173 for the fifth shift stage is operated in the right direction in Fig. 1.

The second synchromesh mechanism 2 is provided to the second shift stage driven gear 152F, which is provided so as to be idly rotated. The third synchromesh mechanism 3 is provided to the third shift stage driven gear 153F, which is provided so as to be idly rotated. More specifically, a sliding sleeve 41 (a driving member) is provided between the second shift stage driven gear 152F and the third shift stage driven gear 153F. The second synchromesh mechanism 2 for the second shift stage frictionally slides when the sliding sleeve 41 is operated in a right direction in Fig. 1 from an intermediate neutral position. The third synchromesh mechanism 3 for the third shift stage frictionally slides when the sliding sleeve 41 is operated in a left direction from an intermediate neutral position in Fig. 1. On the other hand, the first sleeve 171 for the first and second shift stages, which is provided at a right side of the second shift stage driven gear 152F in Fig. 1, serves as an engaging sleeve for the second shift stage when the first sleeve 171 for the first and second shift stages is operated in a left direction in Fig.1. In other words, the first sleeve 171 for the first and second shift stages, is moved in the left direction in Fig. 1 to be engaged with the second shift stage driven gear 152F and thereby the second shift stage driven gear 152F and the output shaft 14 are integrally rotated. Likewise, the second sleeve 172 for the third and fourth shift stages serves as an engaging sleeve for the third shift stage when the second sleeve 172 for the third and fourth shift stages is operated in a right direction in Fig. 1. In other words, the second sleeve 172 for the third and fourth shift stages is moved in the right direction in Fig. 1 to be engaged with the third shift stage driven gear 153F and thereby the third shift stage driven gear 153F and the output shaft 14 are integrally rotated.

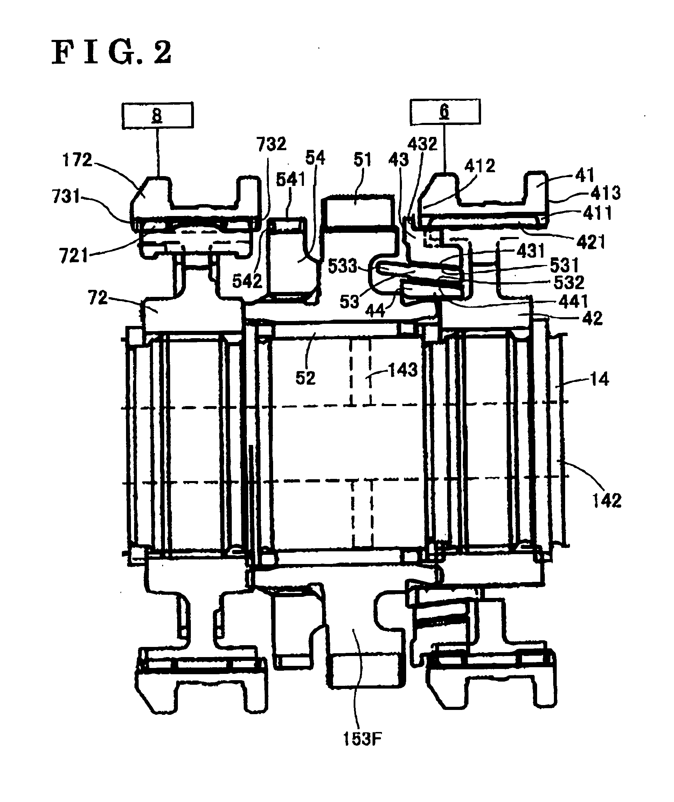

Orientations of the second and third synchromesh mechanisms 2 and 3 configured for the second and third shift stages, respectively, are inverted right and left in an axial direction. However, structures and functions thereof are substantially the same. Therefore, a detailed description of the third synchromesh mechanism 3 for the third shift stage will be provided hereinbelow as an example. Fig. 2 is a cross-sectional view illustrating the third synchromesh mechanism 3 adapted to the third shift stage gear set 153 of the synchromesh transmission 1 in Fig. 1. The third synchromesh mechanism 3 includes the output shaft 14, the third shift stage driven gear 153F, an outer ring 43 (a slide member, a synchronizer ring), an inner ring 44 (a slide member, a synchronizer ring), the sliding sleeve 41, a sliding operating portion 6 (a sliding actuating portion), the second sleeve 172 for the third and fourth shift stages, which serves as the engagement member, and an engaging operating portion 8 (an engaging actuating portion).

As illustrated in Fig. 2, the third shift stage driven gear 153F includes teeth 51 at an outer circumference thereof. The teeth 51 are engaged with the third shift stage driving gear 153D. An inner circumference of the third shift stage driven gear 153F is idly rotatably held at the output shaft 14 via a needle bearing 52. An axial direction oil passage 142 and a radial direction oil passage 143 are provided at the output shaft 14 so as to lubricate the needle bearing 52. A middle ring 53 is provided at a right side of the third shift stage driven gear 153F in Fig. 2. The middle ring 53 includes a tapered outer cone portion 531 (a slide portion, a first slide cone portion) at an outer circumference thereof and a tapered inner cone portion 532 (a slide portion, a first slide cone portion) at an inner circumference thereof. The middle ring 53 is held at the third shift stage driven gear 153F by an engaging nail portion 533 and is rotated integrally with the third shift stage driven gear 153F. A gear piece 54 is provided at a left side of the third shift stage driven gear 153F in Fig. 2. The gear piece 54 includes a first outer spline 541 (an engagement portion, an outer spline) at an outer circumferential surface thereof. The gear piece 54 is thrust into the third shift stage driven gear 153F from a left side in Fig. 2 and integrally assembled thereat. A first chamfer 542 is provided at a left end of the first outer spline 541 in Fig. 2 for a smooth engagement. The first outer spline 541 serves as the engagement portion.

A sliding hub 42 is provided at an outer circumference of the output shaft 14 at a right side of the third shift stage driven gear 153F in Fig. 2 so as to be integrally provided at the output shaft 14. A second outer spline 421 is provided at the outer circumference of the sliding hub 42. The sliding sleeve 41, which includes a first inner spline 411 engaged with the second outer spline 421 of the sliding hub 42, is provided so as to be integrally rotated relative to the sliding hub 42 and so as to move in the axial direction. A first thrusting portion 412, which thrusts the outer ring 43 (described hereinbelow), is provided at a left end of the sliding sleeve 41 in Fig. 2. A second thrusting portion 413 is provided at a right end of the sliding sleeve 41 in Fig. 2. The sliding sleeve 41 is operated by the sliding operating portion 6 (described hereinbelow), which serves as the sliding actuating portion.

The outer ring 43 is provided at the outer circumference of the middle ring 53, which is provided between the third shift stage driven gear 153F and the sliding hub 42. A first tapered sliding cone portion 431 (a second slide cone portion) is provided at an inner circumferential surface of the outer ring 43. The first sliding cone portion 431 is assembled to slide on the outer cone portion 531 of the middle ring 53. A thrust portion 432 is provided at a left edge of an outer circumference of the outer ring 43 in Fig. 2. The thrust portion 432 is thrust by the first thrusting portion 412 of the sliding sleeve 41. The inner ring 44 is provided at the inner circumference of the middle ring 53. A second tapered sliding cone portion 441 (a second slide cone portion) is provided at an outer circumferential surface of the inner ring 44. The second sliding cone portion 441 is assembled to slide on the inner cone portion 532 of the middle ring 53.

When the sliding sleeve 41 is operated in a left direction in Fig. 2, the thrust portion 432 is thrust by the first thrusting portion 412 and thereby the outer ring 43 is moved in the left direction in Fig. 2. Consequently the outer ring 43 and the middle ring 53 slide on each other and further the middle ring 53 and the inner ring 44 slide on each other and thereby synchronization is achieved by friction. Portions related to sliding friction are structured to be similar to a conventional double cone system. However, unlike in the conventional double cone system, the sliding sleeve 41 does not thrust through the outer circumference of the outer ring 43 to be engaged therewith. On the other hard, an engaging hub 72 is provided at the outer circumference of the output shaft 14 at the left side of the third shift stage driven gear 153F in Fig. 2 so as to be integrally provided at the output shaft 14. A third outer spline 721 is provided at an outer circumference of the engaging hub 72. The second sleeve 172 for the third and fourth shift stages, which includes a second inner spline 731 (an inner spline) engaged with the third outer spline 721, is provided so as to be integrally rotated relative to the engaging hub 72 and so as to move in the axial direction. A second chamfer 732 for a smooth engagement is provided at a right end of the second inner spline 731 of the second sleeve 172 for the third and fourth shift stages in Fig. 2. The second sleeve 172 for the third and fourth shift stages is operated by the engaging operating portion 8.

The second sleeve 172 for the third and fourth shift stages is shared with the conventional fourth synchromesh mechanism 164 for the forth shift stage. The second sleeve 172 for the third and fourth shift stages serves as the engaging sleeve for the third shift stage according to the embodiment, when the second sleeve 172 for the third and fourth shift stages is operated in the right direction from a neutral position in Fig. 2. The engaging operating portion 8 serves as the engaging actuating portion according to the embodiment, by which the second sleeve 172 for the third and fourth shift stages is operated in the right direction from the neutral position in Fig. 2. When the second sleeve 172 for the third and fourth shift stages is operated in the right direction in Fig. 2, the second inner spline 731 thereof is engaged with the first outer spline 541 of the gear piece 54 of the third shift stage driven gear 153F. Consequently, the third shift stage driven gear 153F and the output shaft 14 are integrally rotated.

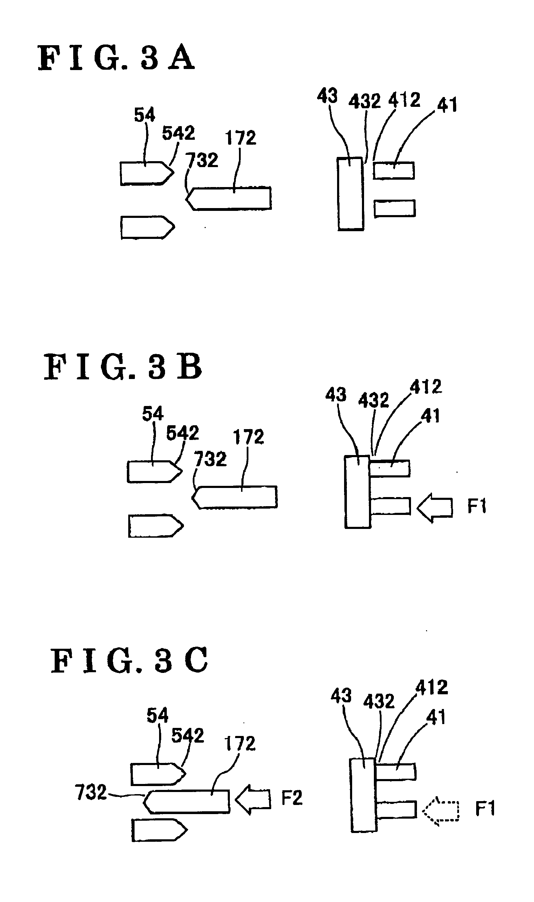

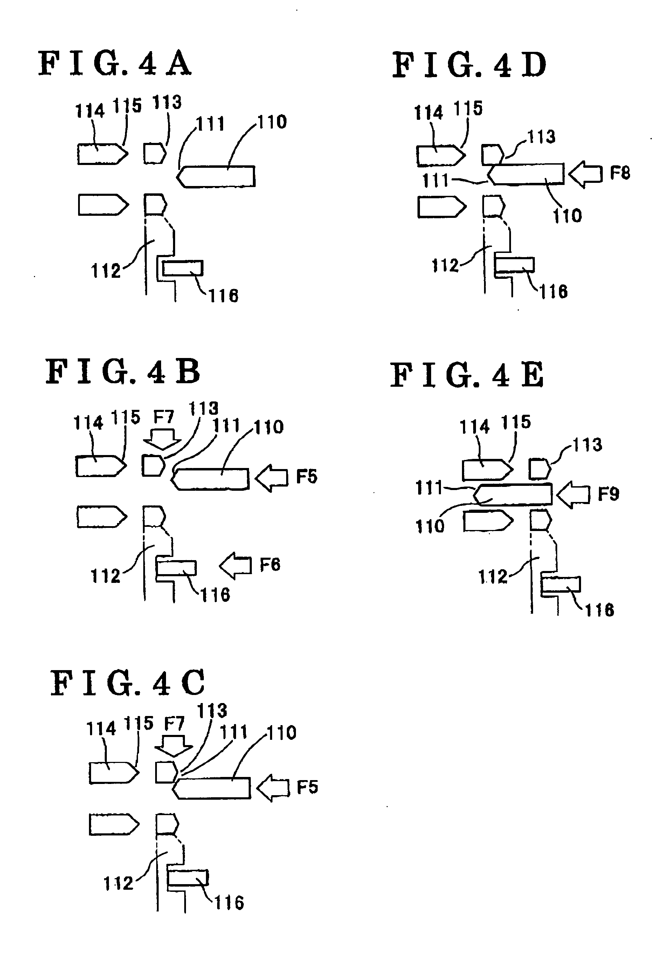

Movements and operations of the third synchromesh mechanism 3 will be described hereinbelow as compared with a conventional structure. Figs. 3A, 3B and 3C schematically illustrate movements and operations of the third synchromesh mechanism 3. Figs. 3A, 3B and 3C illustrate a neutral state, a balk stage and an engaging stage, respectively. Further, Figs. 4A, 4B, 4C, 4D and 4E schematically illustrate movements and functions of synchromesh mechanism of the conventional structure having a synchronizer key. Figs. 4A, 4B, 4C, 4D and 4E illustrate a neutral state, an index stage, a balk stage, a thrusting through stage and an engaging stage, respectively.

In the neutral state shown in Fig. 3A, the first thrusting portion 412 of the sliding sleeve 41 and the thrust portion 432 of the outer ring 43 are spaced away. Further, in the neutral state shown in Fig. 3A, the second sleeve 172 for the third and fourth shift stages and the gear piece 54 are spaced away. Therefore, the third shift stage driven gear 153F and the output shaft 14 are idly rotated in different rotational speed from each other and a rotational torque is not transmitted therebetween. When the sliding sleeve 41 is operated by the sliding operating portion 6, the outer ring 43 is thrust by a first operating force F1 to slide on the middle ring 53 and the middle ring 53 slides on the inner ring 44, and thereby proceeding to the balk stage shown in Fig. 3B. In the balk stage, difference in rotational speed between the third shift stage driven gear 153F and the output shaft 14 is reduced by sliding friction. Consequently, the third shift stage driven gear 153F and the output shaft 14 are synchronized. When synchronization is achieved, the engaging operating portion 8 operates the second sleeve 172 for the third and fourth shift stages by applying a second operating force F2 and thereby proceeding to the engaging stage shown in Fig. 3C. In the engaging stage, the second inner spline 731 of the second sleeve 172 for the third and fourth shift stages and the first outer spline 541 of the gear piece 54 contact each other at the second and first chamfers 732 and 542 and then rotational phases of the second sleeve 172 for the third and fourth shift stage and the gear piece 54 are matched to achieve an engagement therebetween. As a consequence of the engagement, the third shift stage driven gear 153F and the output shaft 14 are integrally rotated. Accordingly, the rotational torque is transmitted at a predetermined ratio.

In the conventional synchromesh mechanism in Figs. 4A, 4B, 4C, 4D and 4E, a third chamfer 111 is provided at an inner spline of a forth sleeve 110 of a single body. An outer spline and a fourth chamfer 113 are provided at a second outer ring 112. An outer spline and a fifth chamfer 115 are provided at a second gear piece 114. A plurality of synchronizer keys 116 is provided between the fourth sleeve 110 and the second outer ring 112 in a circumferential direction thereof. The synchronizer keys 116 are thrust by the fourth sleeve 110 via a biasing spring so that the second synchronizer keys 116 thrust the second outer ring 112.

In a neutral state shown in Fig. 4A, the fourth sleeve 110 is spaced away from the second outer ring 112. The second outer ring 112 does not thrust the synchronizer keys 116. Therefore, a gear and a rotational shaft are idly rotated at different rotational speeds from each other and a rotational torque is not transmitted therebetween. Then, the fourth sleeve 110 is operated in a left direction in Fig. 4B by a third operating force F5 to proceed to an index stage shown in Fig. 4B. Subsequently in the index stage, the synchronizer keys 116 are operated to contact the second outer ring 112 by a fourth operating force F6. The synchronizer keys 116 connect the fourth sleeve 110 and the second outer ring 112 via a spring force F6 of the biasing spring. Consequently, a torque F7 is generated between the gear and the fourth sleeve 110 by difference in rotational speeds. Then, the fourth sleeve 110 is further operated in a left direction in Fig. 4C to proceed to a balk stage shown in Fig. 4C. In the balk stage, the fourth sleeve 110 and the second outer ring 112 contact each other at the third and fourth chamfers 111 and 113. However, the forth sleeve 110 does not move while the torque F7 is applied thereon. The fourth sleeve 110 and the second outer ring 112 are synchronized when difference in rotational speeds is reduced by sliding friction. Consequently, synchronization is achieved and thereby proceeding to a thrusting through stage shown in Fig. 4D. In the thrusting stage, the torque F7 does not remain. Therefore, the fourth sleeve 110 is moved by a fifth operating force F8 so as to thrust through an outer circumference of the second outer ring 112. Subsequently, in an engaging stage shown in Fig. 4E, the fourth sleeve 110, which is moved through the second outer ring 112, is thrust to the second gear piece 114 by a sixth operating force F9. Consequently, the fourth sleeve 110 and the second outer ring 112 contact at the third and fifth chamfers 111 and 115 and thereby an engagement is achieved therebetween.

It is understood by comparing an embodiment in Figs. 3A, 3B and 3C with the conventional structure in Figs. 4A, 4B, 4C, 4D and 4E that the index stage shown in Fig. 4B and the thrusting through stage shown in Fig. 4D are not required in the third synchromesh mechanism 3. Further, each of moving lengths of two sleeves, that is the sliding sleeve 41 and the second sleeve 172 for the third and fourth shift stages, is shorter than a moving length of the conventional fourth sleeve 110. Furthermore, each of the two sleeves, that are the sliding sleeve 41 and the second sleeve 172 for the third and fourth shift stages, individually includes sliding operating portion 6 and the engaging operating portion 8, respectively. Therefore, the sliding sleeve 41 and the second sleeve 172 for the third and fourth shift stages are operated simultaneously. For the above-described reasons, time required for the synchronous engagement is greatly shortened in the third synchromesh mechanism 3 relative to the conventional structure.

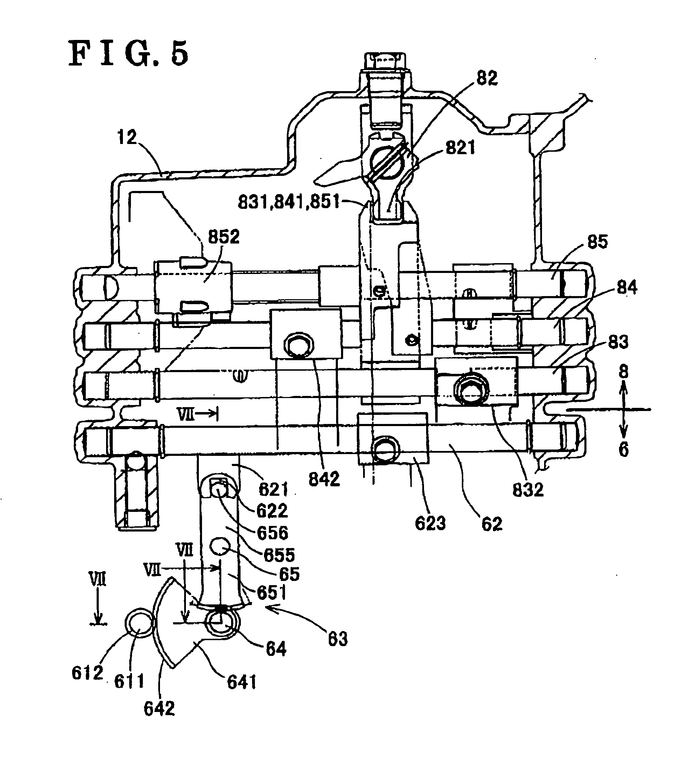

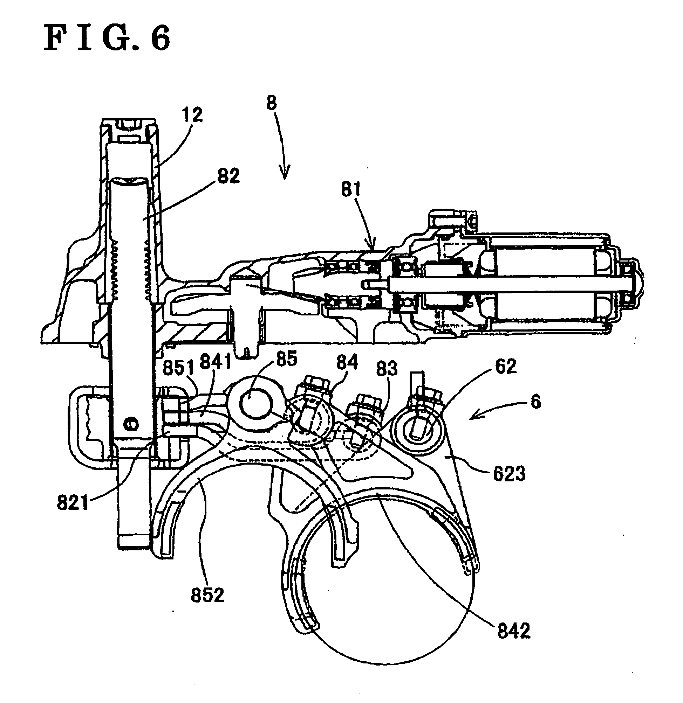

Structures of the sliding operating portion 6 and the engaging operating portion 8 of the synchromesh transmission 1 according to the embodiment in Fig. 1 will be described hereinbelow. Fig. 5 is a planar view illustrating the sliding operating portion 6 and the engaging operating portion 8. Fig. 6 is a side view seen from a left direction in Fig. 5. The structure of the engaging operating portion 8 is an application of the conventional structure. Therefore, the structure of the engaging operating portion 8 will be briefly described hereinbelow and the sliding operating portion 6 will be described in detail hereinbelow.

As illustrated in Figs. 5 and 6, the engaging operating portion 8 includes an actuating mechanism 81, a control shaft 82, a first fork shaft 83, a second fork shaft 84, and a third fork shaft 85. The actuating mechanism 81 includes a shift motor, which is a main body of an actuator, a select motor and a gear mechanism. The actuating mechanism 81 moves the control shaft 82 in an axial direction thereof and rotationally drives the control shaft 82 in a circumferential direction thereof. The control shaft 82, which is also called a shift-and-select shaft, includes an operating head 821. The control shaft 82 selects the first, second and third fork shafts 83, 84 and 85 by moving the operating head 821 in the axial direction of the control shaft 82 (in an upper - lower direction in Fig. 6). The control shaft 82 operates the first, second and third fork shafts 83, 84 and 85 by rotating the operating head 821 in the circumferential direction of the control shaft 82 (in a right - left direction in Fig. 6). As illustrated in Fig. 5, both ends of each of the first, second and third fork shafts 83, 84 and 85 are held at the casing 12 to move in a right - left direction in Fig. 5. The first, second and third fork shafts 83, 84 and 85 respectively include a first fork head 831, a second fork head 841, and a third fork head 851. The first, second and third fork heads 831, 841 and 851 are engaged with and released from the operating head 821. A first sleeve holding portion 832, which holds the first sleeve 171 for the first and second shift stages, is provided at the first fork shaft 83 for the first and second shift stages. Likewise, a second sleeve holding portion 842, which holds the second sleeve 172 for the third and forth shift stages, is provided at the second fork shaft 84 for the third and fourth shift stages. A third sleeve holding portion 852, which holds the third sleeve 173 for the fifth shift stage, is provided at the third fork shaft 85 for the fifth shift stage.

The sliding operating portion 6 includes a sliding motor, which is a main body of an actuator, an operating shaft 62 and a gear mechanism 63, which transmits an operating force. As illustrated in Fig. 5, the operating shaft 62 is provided to be in parallel with the first, second and third fork shafts 83, 84, and 85. Both ends of the operating shaft 62 are held at the casing 12 to move in the right - left direction in Fig. 5. A forth fork head 621 is provided at the operating shaft 62 so as to protrude therefrom orthogonally relative to the axial direction. A recessed portion 622 is provided at a protruding end of the fork head 621. A fourth sleeve holding portion 623, which holds the sliding sleeve 41, is provided at the operating shaft 62.

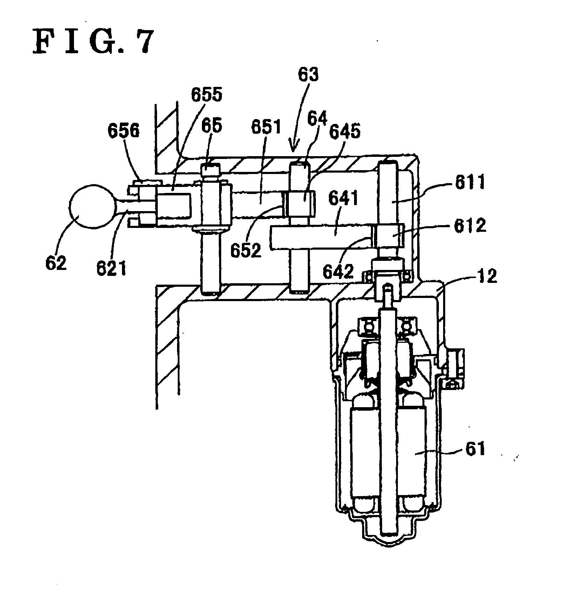

The sliding motor 61 and the gear mechanism 63 will be described hereinbelow with reference to Fig. 7. Fig. 7 is a cross-sectional view illustrating the sliding operating portion 6, which serves as the sliding actuating portion according to the embodiment, taken along line VII-VII-VII-VII in Fig. 5. As illustrated in Fig. 7, the sliding motor 61 is fixed at the casing 12. A first pinion 612 is provided at the motor shaft 611. The gear mechanism 63 transmits the operating force from the first pinion 612 to the recessed portion 622 of the fourth fork head 621 of the operating shaft 62 by changing form of motor output. More specifically, the gear mechanism 63 transmits the operating force by converting a torque generated by the sliding motor 61 to a thrusting force of the operating shaft 62.

As illustrated in Fig. 7, the gear mechanism 63 includes a first shaft body 64and a second shaft body 65, each of which is supported at the casing 12. A gearwheel 641 and a second pinion 645 are fixed at the first shaft body 64. The gear wheel 641 is formed into a substantially sectorial shape. A radius of the second pinion 645 is smaller than that of the gearwheel 641. The gear wheel 641 includes first teeth 642 at a circular arc of the sectorial shape thereof. The gear wheel 641 is engaged with the first pinion 612 of the motor shaft 611. An engaging plate 651 and a shaft driving member 655 are fixed at the second shaft body 65. The engaging plate 651 extends toward the first shaft body 64. The shaft driving member 655 extends toward the operating shaft 62 so as to extend in an opposite direction relative to the engaging plate 651. The engaging plate 651 includes second teeth 652 at an end surface thereof. The engaging plate 651 is engaged with the second pinion 645 of the first shaft body 64. As illustrated in Fig. 7, upper and lower portions of the shaft driving member 655 in Fig. 7 are formed into plate shapes protruding from the second shaft body 65. A driving pin 656 is inserted through the upper and lower portions of the shaft driving member 655 protruding from the second shaft body 65. The driving pin 656 is engaged with the recessed portion 622 of the fork head 621 of the operating shaft 62.

As illustrated in Fig. 7, when the sliding motor 61 is driven to rotate the motor shaft 611, the gear wheel 641, which is engaged with the first pinion 612 of the motor shaft 611, and the first shaft body 64 are rotated. Further, the engaging plate 651, which is engaged with the second pinion 645 of the first shaft body 64, swings. The second shaft body 65 is rotated and thereby the shaft driving member 655 swings. The driving pin 656 operates the operating shaft 62 in the right - left direction in Fig. 5 in accordance with swinging of the shaft driving member 655. Accordingly, the sliding sleeve 41 is operated in the right - left direction in the axial direction thereof.

According to the synchromesh transmission 1 in the embodiment, the second and third synchromesh mechanisms 2 and 3 are adapted to the second and third shift stages, respectively. Therefore, a plurality of sleeves of synchromesh mechanisms is operated simultaneously. More specifically, the sliding sleeve 41 and the first sleeve 171 for the first and second shift stages, or the sliding sleeve 41 and the second sleeve 172 for the third and fourth shift stages, are operated simultaneously. Therefore, time to select and shift the second shift stage gear set 152 and the third shift stage gear set 153 is reduced. Consequently, as an entire effect together with shortening of time required for synchronous engagement, which is described above, the transmission operating time is greatly shortened. Specifically, acceleration performance at the time when the vehicle starts to be driven is improved.

A detailed control of the sliding operating portion 6 and the engaging operating portion 8 may be executed by an electric control device, for example.

## Claims

1. A synchromesh mechanism (2, 3) comprising:
a rotational shaft (13, 14);
a gear (155D, 151F, 152F, 153F, 154F) idly rotatably provided at the rotational shaft (13, 14) and including a slide portion (531, 532) at a first side thereof and an engagement portion (541) at a second side thereof in an axial direction;
a slide member (43, 44) held at the rotational shaft (13, 14) and operated to slide on the slide portion (531, 532) of the gear (155D, 151F, 152F, 153F, 154F) by moving in the axial direction;
a driving member (41) synchronously rotating the rotational shaft (13, 14) and the gear (155D, 151F, 152F, 153F, 154F) by thrusting the slide member (43, 44) so as to slide on the slide portion (531, 532) of the gear (155D, 151F, 152F, 153F, 154F); and
an engagement member (171, 172) held at the rotational shaft (13, 14) and integrally rotating the rotational shaft (13, 14) and the gear (155D, 151F, 152F, 153F, 154F) by moving in the axial direction to engage with the engagement portion (541) of the gear (155D, 151F, 152F, 153F, 154F).

2. The synchromesh mechanism according to claim 1 further including
a sliding actuating portion (6) operating the driving member (41) and an engaging actuating portion (8) operating the engagement member (171, 172).

3. The synchromesh mechanism according to either one of claims 1 or 2, wherein:
the slide portion (531, 532) of the gear (155D, 151F, 152F, 153F, 154F) is a first slide cone portion, which is tapered;
the slide member (43, 44) is a synchronizer ring including a second slide cone portion (431, 441), which slides on the first slide cone portion (531, 532) by being tapered complementary to the first slide cone portion (531, 532); and
the driving member (41) is a sliding sleeve provided at an outer circumference of a sliding hub (42), which is integrally formed at the rotational shaft (13, 14), so as to be integrally rotated and to be moved in the axial direction.

4. The synchromesh mechanism according to any one of claims 1, 2 or 3, wherein:
the engagement portion (541) of the gear (155D, 151F, 152F, 153F, 154F) is an outer spline provided at an outer circumference of the gear (155D, 151F, 152F, 153F, 154F),
the engagement member (171, 172) is an engaging sleeve provided at an outer circumference of an engaging hub (72), which is integrally provided at the rotational shaft (13, 14), so as to be integrally rotated and so as to be moved in the axial direction, the engaging sleeve including an inner spline (731), which is engaged with the outer spline (541).

5. The synchromesh mechanism according to any one of claims 1, 2 or 3, wherein:
one of the engagement portion (541) of the gear (155D, 151F, 152F, 153F, 154F) and the engagement member (171, 172) includes a plurality of grooves provided so as to be spaced away from each other in a circumferential direction and the other one of the engagement portion (541) of the gear (155D, 151F, 152F, 153F, 154F) and the engagement member (171, 172) includes a corresponding number of protruding portions engaged with the grooves.

6. A synchromesh transmission (1) includes:
a casing (12);
a plurality of rotational shafts (13, 14) supported at the casing (12) and transmitting a torque;
a plurality of gear sets (151, 152, 153, 154, 155) provided at the rotational shafts and achieving a predetermined gear ratio by selectively engaging with the rotational shafts (13, 14); and
a synchromesh mechanism (2, 3) according to any one of claims 1 - 5 provided at at least one of the gear sets (151, 152, 153, 154, 155).

7. The synchromesh transmission (1) according to claim 6, wherein
the synchromesh mechanism (2, 3) according to any one of claims 1- 5 is provided at the gear set (151, 152, 153, 154, 155) for achieving an intermediate gear ratio.

8. The synchromesh transmission (1) according to either one of claims 6 or 7, wherein
the synchromesh mechanism (2, 3) according to any one of claims 1- 5 is provided at at least one of gears (155D, 151F, 152F, 153F, 154F) of plurality of rotational shafts (13, 14).
